# EUROPÄISCHE PATENTSCHRIFT

(11) **EP 4 041 621 B1**
(45) Veröffentlichungstag und Bekanntmachung des Hinweises auf die Patenterteilung: **31.07.2024**
(21) Anmeldenummer: 20796707.6
(22) Anmeldetag: 11.10.2020
(51) Int. Cl.: B62H 3/02, B62H 5/00, B62K 3/00, B62M 6/80

(54) **VERBINDUNGSVORRICHTUNG ZUM VERBINDEN EINES KLEINFAHRZEUGS MIT EINER BASISSTATION**
CONNECTION SYSTEM FOR CONNECTING A SMALL VEHICLE TO A BASE STATION
SYSTÈME DE RACCORDEMENT POUR RELIER UN PETIT VÉHICULE À UNE STATION DE BASE

(30) Priorität: 13.10.2019 DE 102019007080; 17.12.2019 DE 102019008753; 26.05.2020 DE 102020114118
(43) Veröffentlichungstag der Anmeldung: 17.08.2022
(73) Patentinhaber: Waterman Charging System GmbH, 10707 Berlin (DE)
(72) Erfinder: KUECKENS, Helmut, 10625 Berlin (DE); REINHOLD, Martin, 28329 Bremen (DE)
(74) Vertreter: Kohlhof, Stephan
(86) Internationale Anmeldenummer: PCT/EP2020/078525
(87) Internationale Veröffentlichungsnummer: WO 2021/074044

(56) Entgegenhaltungen:
- EP-A1- 1 820 722
- EP-A1- 2 338 779
- FR-A1- 3 062 634
- KR-B1- 101 112 490
- US-A1- 2015 074 004
- US-A1- 2018 141 603

## Beschreibung

Die Erfindung betrifft eine Verbindungsvorrichtung zum Verbinden eines Kleinfahrzeugs mit einer Basisstation.

US 2018/141603 A1 offenbart die Merkmale des Oberbegriffs des Anspruchs 1.

Derzeit werden sog. Verleih e-scooter/e-bikes in großer Anzahl in öffentlichem Verkehrsraum abgestellt. Dabei werden diese häufig nicht sachgerecht abgestellt, sie lassen sich in Bäumen und Gewässern wiederfinden und werden teilweise verkehrsbehindernd abgestellt. Es ist damit zu rechnen, dass einige Kommunen diese Art des Verleihens deutlich stärker reglementieren werden. Zudem ist aufgrund eines unsachgemäßen Handlings für das Aufladen und das Abstellen die durchschnittliche Lebensdauer solcher Fahrzeuge teilweise auf wenige Monate begrenzt.

Nutzer haben derzeit keine Möglichkeit, ihre privat angeschafften Kleinfahrzeuge an öffentlichen Basisstationen abzustellen und insbesondere dort aufzuladen.

Es ist daher Aufgabe der Erfindung, eine verbesserte Möglichkeit zum Abstellen von Kleinfahrzeugen insbesondere im öffentlichen Raum bereitzustellen. Dies wird gelöst durch eine Vorrichtung, Anordnung und Verwendung nach den Hauptansprüchen; Ausgestaltungen sind Gegenstand der Unteransprüche sowie der Beschreibung. Die angegebenen Merkmale und Vorteile sind umfassend zwischen der offenbarten Vorrichtung, Anordnung und Verwendung kombinierbar.

Die Basisstation ist insbesondere eine Ladestation, insbesondere eine öffentliche Ladestation. Zudem eignet sich die Basisstation auch für eine isolierte Nutzung beispielsweise eines Hotels oder für den Werksverkehr in einem Werksgelände.

In einer nicht beanspruchten Ausgestaltung kann das Verriegeln dadurch erfolgen, dass der Schwung des zweiten Sicherungsteils an der abfallenden Verbindungsrichtung die ersten Sicherungseinheit oder der Sicherungskörper in dessen Schließzustand überführt. Dieses Überführen kann dabei sowohl durch eine rotatorische als auch eine translatorische Bewegung umfassen. Hierbei kann eine Rückstellfeder gespannt werden.

Nach dem Überführen des Sicherungskörper in den Schließzustand kann dieser durch ein Stellglied in dieser Stellung gesichert insbesondere verriegelt werden. Für das spätere Lösen wird das Stellglied aus seiner sichernden Stellung insbesondere durch eine Aktuatoranordnung entfernt. Das Entnehmen des zweite Sicherungsteils vom ersten Sicherungsteil kann durch die gespannte Rückstellfeder unterstützt werden.

In einer Ausgestaltung liegt die Besonderheit insbesondere darin, dass die erste Sicherungseinheit, welche selektiv zwischen einem Freigabezustand und einem Schließzustand überführbar ist, nicht am Fahrzeug sondern am distalen Ende (von der Basisstation aus betrachtet) des Sicherungskabels angebracht ist.

In einer Ausgestaltung erfolgt die Identifikation eines Fahrzeugs, welches über die Verbidungsvorrichtung mit der Basisstation verbunden ist anhand einer drahtlosen Datenkommunikation. Dabei wird seitens des Fahrzeug ein Identifikationssignal drahtlos ausgesendet, welches von der Basisstation empfangen wird.

Die Basisstation kann zur drahtlosen Kommunikation eine Empfangseinheit aufweisen, und/oder eine Auswerteeinheit aufweisen. Das Fahrzeug kann zur drahtlosen Kommunikation eine Sendeeinheit aufweisen. Die drahtlose Kommunikation kann über ZigBee oder Bluetooth erfolgen.

Insbesondere wenn mehrere Fahrzeuge an einer Basisstation angeschlossen sind kann eine Zuordnung eines individuellen Fahrzeugs zu einer Verbindungsvorrichtung vorgenommen werden. Dazu kann seitens der Basisstation eine Testbestromung an einer ausgewählten Verbindungsvorrichtung aus mehreren Verbindungsvorrichtungen durchgeführt werden. Das an der ausgewählten Verbindungsvorrichtung angeschlossene Fahrzeug kann die Testbestromung erkennen und ein Bestätigungssignal der ersfassten Testbestromung in Kombination mit dem Identifikationssignal absenden, was wiederum von der Basisstation erfasst wird. Hieraus kann die Basisstation ermitteln, welches Fahrzeug aus einer Vielzahl von in Empfangsreichweite befindlichen Fahrzeugen an einer ausgewählten Verbindungsvorrichtung angeschlossen ist.

Die Erfindung wird anhand der Figuren nachfolgend näher erläutert; hierin zeigt
- Figur 1: eine geeignete Basisstation und geeignete Elektrokleinfahrzeuge, welche über eine erfindungsgemäße Verbindungsvorrichtung miteinander verbunden werden können;
- Figur 2: eine Radwinkelführung der Basisstation mit Teilen eines Elektrokleinfahrzeugs
a) in Seitenansicht,
b) in Draufsicht;
- Figur 3: eine Verbindungsvorrichtungen in einer nicht beanspruchten Ausgestaltung in zwei perspektivischen Darstellungen;
- Figur 4: der Verlauf einer Verbindungsrichtung des ersten Schließteils während des Verbindungsvorgangs;
- Figuren 5-8: die Verbindungsvorrichtung nach Figur 3 teilweise in Seitenansicht während unterschiedlicher Phasen des Verbindungsvorgangs;
- Figur 9: eine erfindungsgemäße Verbindungsvorrichtung in einer weiteren Ausgestaltung in Seitenansicht in verbundenem Zustand;
- Figur 10: ein zweites Schließteil der Verbindungsvorrichtung nach Figur 9;
- Figur 11: ein erstes Schließteil der Verbindungsvorrichtung nach Figur 9 im Querschnitt
a) in Freigabestellung,
b) im Schließzustand;
- Figur 12: ein Sicherungskabel der Verbindungsvorrichtung nach Figur 9 im Querschnitt;
- Figur 13: eine Abwandlung der Verbindungsvorrichtung nach Figur 9;
- Figur 14: eine Basisstation an einer Straßenlaterne mit mehreren Fahrzeugpositionen;
- Figur 15: zwei Flussdiagramme für den Verfahrensablauf während eines Ausleihvorgangs und eines Rückgabevorgangs;
- Figur 16: Schließteile einer Verbindungsvorrichtung in einer weiteren nicht beanspruchten Ausgestaltung in Seitenansicht in Einzeldarstellung
- Figur 17: ein Schließteil mit extern dazu angeordnetem Freigabeaktuator;
- Figur 18: eine Abwandlung des Sicherungskabels nach Figur 12 mit Kraftübertragungsmittel.

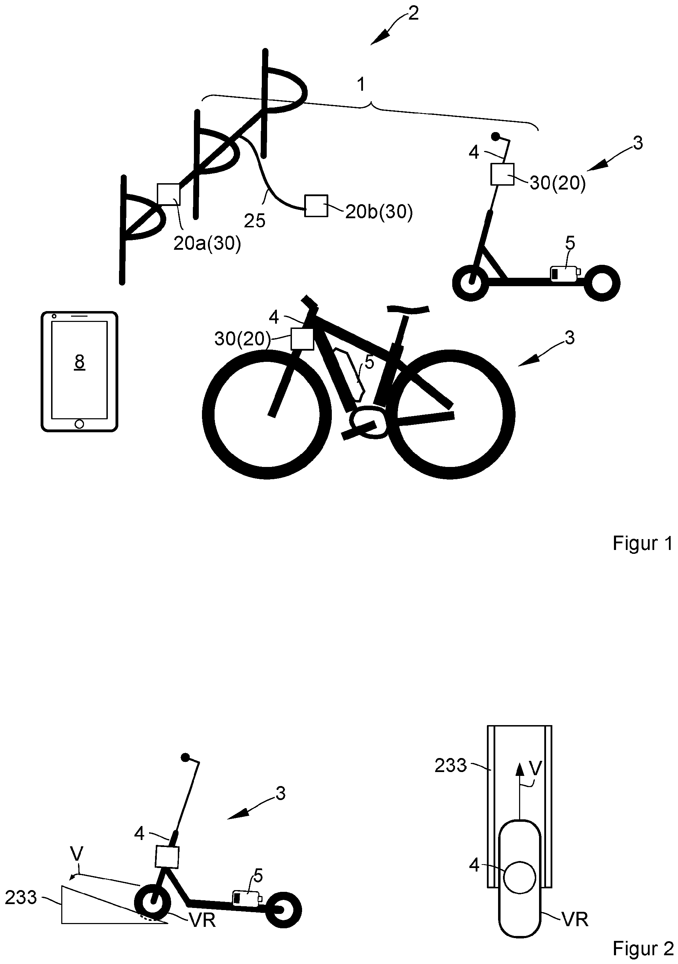

Figur 1 zeigt eine Basisstation 2 und ein Elektrokleinfahrzeug 3 mit einem aufladbaren Akkumulator 5, welche über eine Verbindungsvorrichtung 2 miteinander verbunden werden. Die Verbindungsvorrichtung 2 umfasst ein erstes Schließteil 20 und ein zweites Schließteil 30. Beispielhaft ist das erste Schließteil 20 fest an der Basisstation 2 angebracht und das zweite Schließteil 30 ist an dem Elektrokleinfahrzeug 3 angebracht. Fest angebracht bedeutet hierbei, dass die Verbindung im bestimmungsgemäßen Betrieb nicht gelöst wird und Vorkehrungen getroffen sind, die ein unautorisiertes Lösen vermeiden sollen. Dies schließt aber nicht aus, dass unter Verwendung diverser Werkzeuge eine Trennung zu Wartungs- und Montagezwecken oder durch Gewalteinwirkung möglich ist. Die Basisstation 2 ist in diesem Fall auch eine Ladestation zum Laden der an den Elektrokleinfahrzeugen angebrachten Akkumulatoren 5.

Alternativ kann das erste Schließteil 20 fest an dem Elektrokleinfahrzeug 3 angebracht sein und das zweite Schließteil 30 kann fest an der Basisstation 2 angebracht sein. Diese Konfiguration ist durch die Bezugszeichen 20, 30 in Klammern dargestellt.

Das Kleinfahrzeug kann ein Roller (einschließlich Motorroller, Tretroller, Scooter) oder ein Fahrrad sein, die insbesondere jeweils elektrisch betrieben sind. Das Kleinfahrzeug ist insbesondere zum Transport einer Person, maximal zwei Personen zugelassen. Das Kleinfahrzeug ist insbesondere ein Zweirad.

In einer ersten Variante ist das erste Schließteil 20a ortsfest an der Basisstation 2 angebracht. Zur Verbindung der beiden Schließteile 20a, 30 ist das Elektrokleinfahrzeug 3 in eine definierte Ausrichtung zur Basisstation 2 zu bringen.

In einer zweiten Variante ist das erste Schließteil 20b über ein Sicherungskabel 25 mit der Basisstation 2 beweglich aber gesichert verbunden. Zur Verbindung der beiden Schließteile 20b, 30 ist das Elektrokleinfahrzeug 3 lediglich innerhalb einer Reichweite zur Basisstation 2 zu positionieren, wobei die Reichweite durch die Länge des Sicherungskabels 25 begrenzt ist. Das zweite Schließteil 30 ist bevorzugt an einer Stelle des Kleinfahrzeugs angebracht, die für einen Nutzer leicht zugänglich ist.

Im Rahmen der vorliegenden Offenbarung kann das zweite Schließteil 30 bzw. erste Schließteil 20 als Bestandteil des Kleinfahrzeugs 3 verstanden werden und das erste Schließteil 20 bzw. zweite Schließteil 30 kann als Bestandteil der Basisstation 2 verstanden werden. Zur Verbindung des jeweiligen Schließteils z.B. an einem Rahmenteil des Fahrzeugs können beliebige Adapter verwendet werden.

Die Bedienung der Verbindungsvorrichtung während eines Ausleihvorgangs und eines Rückgabevorgangs kann optional anhand einer App erfolgen, die auf einem Mobiltelefon 8 zur Anwendung installiert ist.

Anhand der Figuren 2 bis 8 wird eine erste nicht beanspruchte Ausgestaltung der ersten und zweiten Schließteile 20, 30 beschrieben. Insbesondere handelt es sich hierbei um eine nicht beanspruchte Ausgestaltung der ersten Variante insbesondere ohne Sicherungskabel, bei der das erste Schließteil 20 ortsfest an der Basisstation 2 angeordnet ist.

Das erste Schließteil 20 umfasst eine erste Sicherungseinheit 21. Die erste Sicherungseinheit 21 umfasst einen ersten Sicherungskörper 211, beispielhaft in Form einer Sicherungsklinke 211. Der Sicherungskörper 211 ist beweglich, beispielhaft verdrehbar, zwischen einer Freigabestellung und einem Schließzustand. In der Freigabestellung gibt der Sicherungskörper 211 den Zugang zu einer Sicherungsaufnahme 215 frei; in dem Schließzustand verschließt der Sicherungskörper 211 den Zugang zu der Sicherungsaufnahme 215.

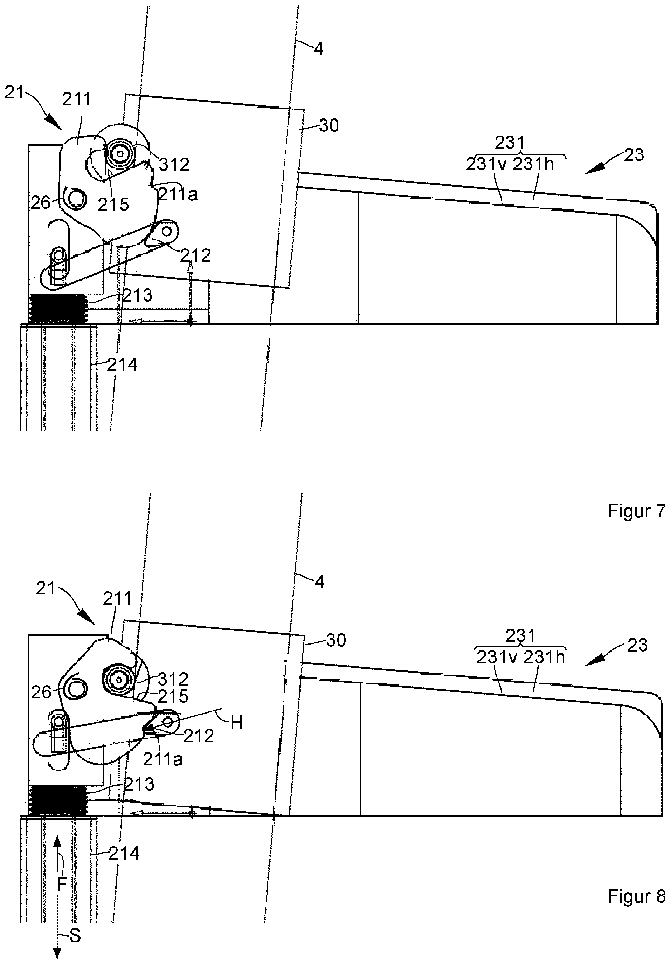

Das zweite Schließteil 30 umfasst eine zweite Sicherungseinheit 31 mit einem Schließriegel 312. Wenn der Schließriegel 312 in dessen Schließzustand ist, so ist der Schließriegel 312 in der Sicherungsaufnahme 215 aufgenommen und der Sicherungskörper 211 ist in dessen Schließzustand. Dies ist in Figur 8 dargestellt. Durch ein Stellglied 212 wird der Sicherungskörper 211 in dessen Schließzustand gehalten. Das Stellglied 212 kann ein Drehriegel sein. Figur 8 zeigt das Stellglied 212 in dessen Riegelstellung. Dabei interagiert das Stellglied 212 formschlüsssig mit der Sicherungsaufnahme 215 bzw. dessen Riegelausnehmung 211a. Beispielhaft greift das Stellglied 212 in eine Riegelausnehmung 211a am Sicherungskörper 211 ein und verhindert dadurch die Bewegung des Sicherungskörpers 211 aus dem Schließzustand heraus.

Das Stellglied 211 wird durch eine Aktuatoranordnung 213, 214 betätigt. Die Aktuatoranordnung umfasst einen Freigabeaktuator 214 und eine Stellfeder 213. Das Stellglied 212 wird durch die Stellfeder 213 in der verriegelnden Stellung (Riegelstellung) gehalten (Federkraft F), ohne dass dafür Energie bereitgestellt werden muss (Figur 8).

Der Freigabeaktuator 214 kann selektiv eine Stellkraft S ausüben (gestrichelt dargestellt in Figur 8), welche der Federkraft F entgegenwirkt. Der aktivierte Freigabeaktuator 214 übersteuert folglich die Beaufschlagung des Stellglieds 212 durch die Stellfeder 213 und das Stellglied 212 wird aus der verriegelnden Stellung herausgeführt. Durch ein leichtes Anheben der Lenkstange 4 kann dann der Sicherungskörper 211 aus der Sicherungsaufnahme 215 entnommen werden.

Die Verbindung des Fahrzeugs mit der Basisstation startet zunächst mit einer Grobausrichtung des zweiten Schließteils 30 zum ersten Schließteil 20. Dazu ist die Basisstation 2 mit einer Radwinkelführung 233 ausgestattet, welche in Figur 2 gezeigt ist. Hierdurch kann das Vorderrad VR des Fahrzeugs 2 parallel zur Verbindungsrichtung V ausgerichtet werden. Die Radwinkelführung 233 kann eine geeignete Seitenführung aufweisen, insbesondere ähnlich einer Vorderradhalterung einer Fahrradabstellanlage. Ein ausreichendes Spiel sollte vorgesehen sein, damit das Fahrzeug 2 weiter leicht in Verbindungsrichtung V verlagert werden kann. Durch die Radwinkelführung 233 wird die Lenkstange 4 und damit das zweite Schließteil 30 in eine Ausrichtung zum ersten Schließteil 20 gebracht, in welcher die weitere Führung gewährleistet ist.

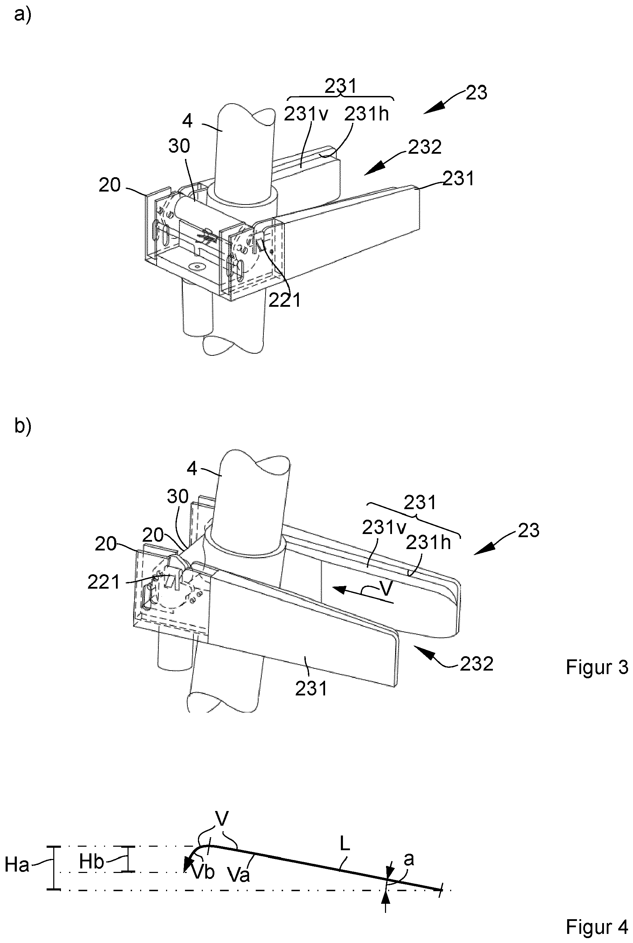

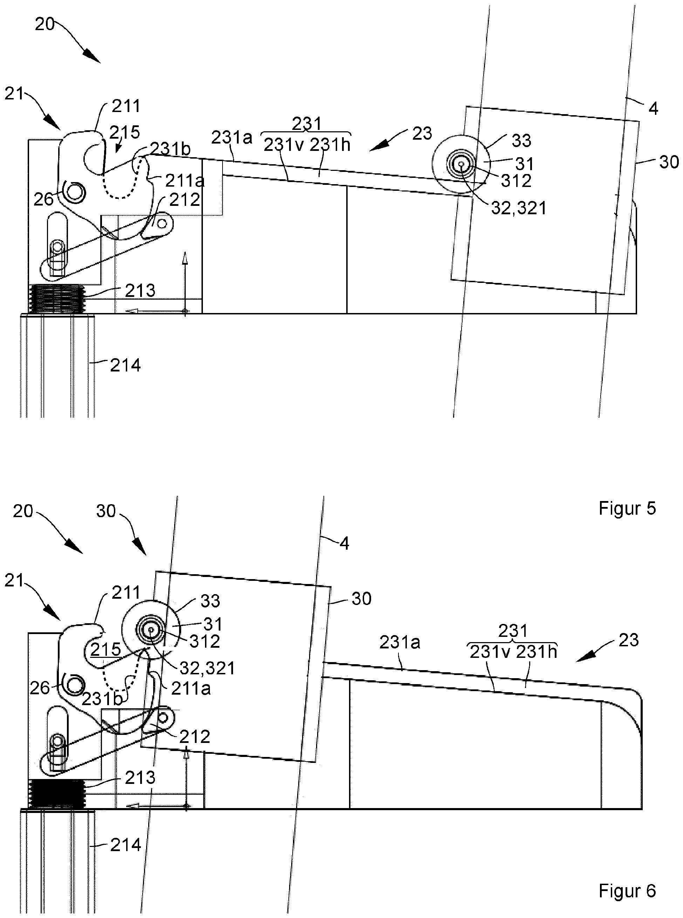

Das erste Schließteil 20 umfasst zur weiteren Führung eine Führungsanordnung 23, anhand welcher ein zweites Führungsglied 33 (siehe Figur 6) der zweiten Sicherungseinheit 31 beim Verbindungsvorgang definiert geführt werden kann. Die Führungsanordnung 23 umfasst insbesondere zwei parallel zueinander verlaufende Führungsschienen 231, die einen dazwischenliegenden Lenkstangenaufnahmeraum 232 definieren (Figur 3). Beim Verbindungsvorgang ist so ein Abschnitt der Lenkstange 4 des Kleinfahrzeugs 2 zwischen den Führungsschienen 231 gehalten. Die Führungsschienen 231 können grundsätzlich mehrteilig ausgebildet sein und definieren eine Verbindungsrichtung V, entlang der das Führungsglied 33 entlang der Führungsschiene 231 geführt wird.

Die Führungsschienen 231 umfassen insbesondere jeweils eine Horizontalführungsfläche 231h sowie eine Vertikalführungsfläche 231v. Durch diese Flächen wird das Führungsglied 33 horizontal quer zur Verbindungsrichtung V und vertikal definiert geführt. Die Horizontalführungsfläche 231h sowie die Vertikalführungsfläche 231v müssen nicht exakt horizontal bzw. vertikal ausgerichtet sein; die Flächen stellen allerdings eine horizontale bzw. vertikale des Führungsglied 33 sicher. Anhand einer geeigneten geneigten Fläche könnten die Horizontalführungsfläche 231h sowie die Vertikalführungsfläche 231v auch durch eine gemeinsame Führungsfläche gebildet sein.

Figur 4 zeigt den Verlauf der Verbindungsrichtung V. Entlang eines erstes Schienenabschnitts 231a (Figur 6) weist die Verbindungsrichtung V einen ersten ansteigenden Abschnitt Va auf, der einen spitzen Winkel a größer 0° gegenüber der Horizontalen, vorzugsweise mehr als 10° ausbildet. Während das Führungsglied 33 an der Schiene entlang der Verbindungsrichtung geführt wird das Fahrzeug 2 folglich vorne durch die Betätigung des Nutzers leicht angehoben (Figur 7 bis Figur 8). Eine durch den ersten Abschnitt Va überwundene erste Höhendifferenz Ha beträgt insbesondere zumindest 3cm. Dabei kann das Vorderrad VR die Bodenhaftung verlieren. Der ansteigende Schienenverlauf kann zudem Toleranzen bei der vertikalen Positionierung des Führungsgliedes 33 am Fahrzeug 2 ausgleichen.

Entlang eines in Verbindungsrichtung V nachfolgenden, zweiten abfallenden Schienenabschnitts 231b (Figur 6) weist die Verbindungsrichtung V einen zweiten abfallenden Abschnitt Vb auf. Hierdurch wird das Fahrzeug durch die Gewichtskraft nach unten beaufschlagt. Eine durch den zweiten Abschnitt Vb überwundene zweite Höhendifferenz Hb ist insbesondere geringer als die erste Höhendifferenz Ha, insbesondere derart, dass das Fahrzeug weiterhin insgesamt gegenüber einer Fahrbahnoberfläche angehoben bleibt. Während des Gleitens nach unten entlang des zweiten Schienenabschnitts 231b gerät das Führungsglied 33 in die Sicherungsaufnahme 215 (Figur 6 bis Figur 7). Bei der weiteren Bewegung nach unten (Figur 7 bis Figur 8) wird der Schließriegel 312 nach unten in die Sicherungsaufnahme 215 geführt. Durch die dabei frei werdende potentielle Energie wird der Sicherungskörper 211 entgegen einer Rückstellfeder 26 in den Schließzustand überführt. Zudem wird die Rückstellfeder 26 gespannt.

Der Freigabeaktuator 214 kann energielos geschaltet sein, sobald der Sicherungskörper in dessen Freigabestellung ist (Figuren 5 bis 7). Die Figuren verdeutlichen, dass das Stellglied 212 dann vom Sicherungskörper 211 selbst außerhalb der Riegelstellung ist. Sobald der Schließzustand erreicht wird, nimmt das Stellglied 211 beaufschlagt durch die Stellfeder 213 die verriegelnde Stellung ein.

Die Rückstellfeder 26 ist in diesem Beispiel als Torsionsfeder ausgebildet. Die Rückstellfeder 26 kann derart dimensioniert oder vorgespannt werden, dass diese die Gewichtskraft, durch die der Schließriegel 312 nach unten gedrückt wird, ausgleicht. Dann bedarf es sowohl beim Einführen als auch beim Entnehmen des Schließriegels 312 aus der Sicherungsaufnahme 215 allenfalls einer geringfügigen Kraftaufwendung durch den Nutzer. Sobald also der Nutzer das Fahrzeug entnimmt beaufschlagt die Rückstellfeder 26 den Sicherungskörper 211 in die Freigabestellung. Da nun ein Rückfallen des Stellglieds 212 in die verriegelnde Stellung durch den Sicherungskörper 211 selbst verhindert ist, ist die Stellkraft S entbehrlich und der Freigabeaktuator wird energielos geschaltet.

Das erste Schließteil 20 weist eine erste Kontakteinheit 22 mit zumindest einem oder mehreren Federkontakten 221 auf. Das zweite Schließteil 30 weist eine zweite Kontakteinheit 32 auf, die komplementär zur ersten Kontakteinheit 22 ausgebildet ist.

Die zweite Kontakteinheit 32 umfasst zumindest eine oder mehrere erste Kontaktvorsprünge 321, die insbesondere am Schließriegel 312 beidseitig hervorstehen. Die beiden ersten Kontaktvorsprünge 321 sind in Seitenansicht in etwa mittig der Sicherungsaufnahme 215 angeordnet. Damit ist die Position der Kontaktvorsprünge 321 unabhängig von der Ausrichtung des Lenkstange (es ist offensichtlich, dass sich bei einer Winkeländerung der Lenkstange 4 die Position der Kontaktvorsprünge 321 nicht ändern würde). Über die Kontakteinheiten 22, 32 wird der Ladestrom zwischen der Basisstation 2 und dem Elektrokleinfahrzeug 3 übertragen und ggf. ein Datenaustausch durchgeführt.

Die Verbindungsvorrichtung weist einen selbsthemmenden Riegelmechanismus auf. Wenn beispielsweise ein Nutzer versucht, gewaltsam den Sicherungskörper 211 durch Beaufschlagung aus der Sicherungsaufnahme 215 zu entnehmen, so wird dadurch zumindest eine geringfügige Verdrehung des Sicherungskörper 211 (in Figur 8 im Gegenuhrzeigersinn) erzeugt. Dann wird Riegelausnehmung 211a gegen das Stellglied 212 gepresst, wodurch sich aber automatische eine Hemmkraft H vergrößert, die das Stellglied 212 in der verriegelnden Stellung hält (Figur 8). Je stärker der Nutzer zieht, desto größer wird die Hemmkraft H.

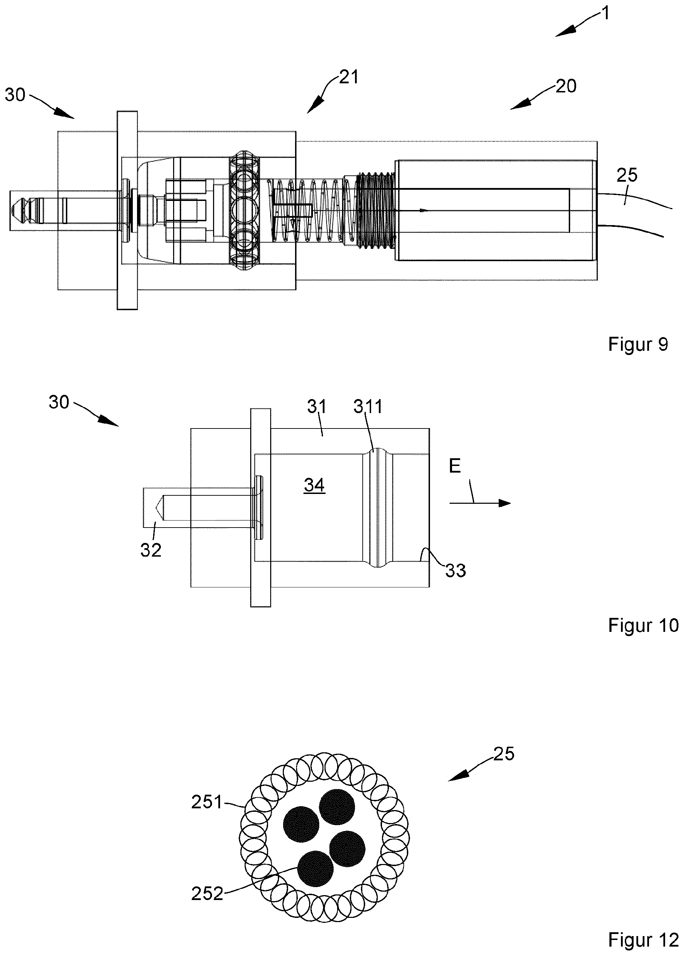

In den Figuren 9 bis 12 ist eine zweite nicht beanspruchte Ausgestaltung der ersten und zweiten Schließteile 20, 30 dargestellt. Das erste Schließteil 20 weist einen als Stecker ausgebildeten Grundkörper 24 auf; das zweite Schließteil 30 ist als Hülse mit einem Aufnahmeraum 34 ausbildet, welcher das erste Schließteil 20 im gekoppelten Zustand aufnimmt. Insbesondere handelt es sich hierbei um eine nicht beanspruchte Ausgestaltung der zweiten Variante mit Sicherungskabel.

Das erste Schließteil 20 umfasst eine erste Sicherungseinheit 21. Die erste Sicherungseinheit 21 umfasst zumindest einen Sicherungskörper 211, in diesem Fall eine Mehrzahl an Sicherungskörpern 211. Die Sicherungskörper 211 sind beweglich zwischen einer Freigabestellung und einem Schließzustand.

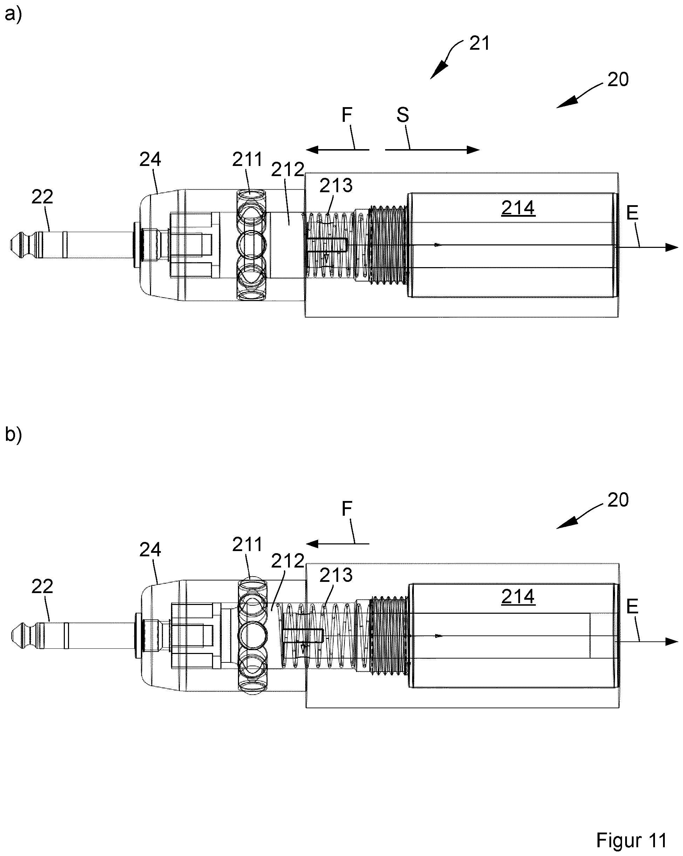

Die Sicherungskörper 211 sind an einer Umfangsfläche des ersten Grundkörpers 24 angeordnet. Die Sicherungskörper 211 sind als beispielsweise radial bewegliche Sicherungskugeln ausgebildet. Bezogen auf eine Entnahmerichtung E sind diese Sicherungskörper 211 unbeweglich. Radial zu dieser Entnahmerichtung E sind die Sicherungskörper 211 im Freigabezustand (Figur 11a) beweglich; im Schließzustand (Figur 11b) ist diese radiale Beweglichkeit verhindert und die Sicherungskörper 211 nehmen eine radial äußere Position ein.

Durch ein Stellglied 212 werden die Sicherungskörper 211 in dem Schließzustand gehalten. Dabei beaufschlagt das Stellglied 212 die Sicherungskörper 211 nach radial außen. Das Stellglied 212 wird wiederum durch eine Stellfeder 213 in dieser Stellung gehalten (Federkraft F), ohne dass dafür Energie bereitgestellt werden muss (Figur 11b).

Das erste Schließteil 20 umfasst einen Freigabeaktuator 214, der selektiv eine Stellkraft S ausüben kann, die der Federkraft F entgegenwirkt. Bei aktiviertem Aktuator 214 entfällt folglich die Beaufschlagung des Stellglieds 212 durch die Stellfeder 213. Die Sicherungskörper 211 können sich nun radial frei bewegen und ggf. den Schließzustand verlassen (Figur 11a). Der Freigabeaktuator 214 bildet gemeinsam mit der Stellfeder 213 eine Aktuatoranordnung 213, 214 zur selektiven Überführung der ersten Sicherungseinheit in und aus dem Schließzustand.

Ein Freigabeaktuator 214 wird insbesondere mit einer Versorgungsspannung betrieben, die identisch ist zur Versorgungsspannung und/oder Ladespannung des Akkumulators am Fahrzeug sein kann. Aufwendige Spannungswandler werden damit obsolet. Insbesondere werden Elektrokleinfahrzeuge mit einer Versorgungsspannung und/oder Ladespannung von 24V, 36V. 42V ,48V oder 54V betrieben. Damit ist es möglich, die Energie und die Ansteuerung des Freigabeaktuators von der Ladestation oder sogar vom Elektrokleinfahrzeug unter Verwendung eines zusätzlichen elektrischen Kontaktes zu realisieren.

Das zweite Schließteil 30 umfasst eine zweite Sicherungseinheit 31. Dazu ist dem Aufnahmeraum 34 an einer inneren Umfangsfläche eine Ringnut 311 vorgesehen, die koaxial zur Entnahmerichtung E ausgerichtet ist. Wenn die Sicherungskörper 211 in deren Schließzustand sind, ragen diese in die Ringnut 311 (Figur 10) zumindest teilweise hinein, wodurch ein Herausnehmen des ersten Schließteils 20 aus dem zweiten Schließteil 30 verhindert ist.

Das erste Schließteil 20 weist eine erste Kontakteinheit 22 auf, die beispielsweise die Form eine Klinkensteckers oder einer Buchse hat. Das zweite Schließteil 30 weist eine zweite Kontakteinheit 32 auf, die komplementär zur ersten Kontakteinheit ausgebildet ist und beispielsweise die Form einer Klinkenbuchse hat. Es können auch andersartige Steckverbindungstypen zur elektrischen Kontaktierung verwendet werden, beispielsweise kann die Anordnung der Klinke bzw. Buchse an den beiden Schließteilen vertauscht werden. Über die Kontakteinheiten 22, 32 wird der Ladestrom zwischen der Basisstation 2 und dem Elektrokleinfahrzeug 3 übertragen und ggf. ein Datenaustausch durchgeführt. Für einen Datenaustausch insbesondere zur Identifizierung mittels eines EEPROMs können weitere Kontaktstellen vorgesehen sein.

Die anhand der Figuren 9 - 12 vorgestellte Verbindungsvorrichtung 1 ist insbesondere dazu geeignet, in der zweiten Variante mit Sicherungskabel 25 angewendet zu werden. In einer solchen Anwendung ist das Sicherungskabel 25 im Betrieb fest mit der Basisstation 2 verbunden und wird von der Basisstation nicht entfernt (allenfalls zu Wartungs-. oder Austauschzwecken). In der nicht beanspruchten Ausgestaltung nach Figur 9 befindet sich das erste Schließteil 20 an demjenigen Ende des Sicherungskabels 25, welches zum Elektrokleinfahrzeug 3 geführt wird und dort mit dem zweiten Schließteil 30 verbunden wird. Das zweite Schließteil 30 ist am Elektrokleinfahrzeug 3 angebracht.

Im Gegensatz zu bekannten Seilschlossvarianten ist also vorgesehen, dass der Schließmechanismus mit dem Freigabeaktuator 214 am beweglichen Ende des Sicherungskabels 25 angebracht ist.

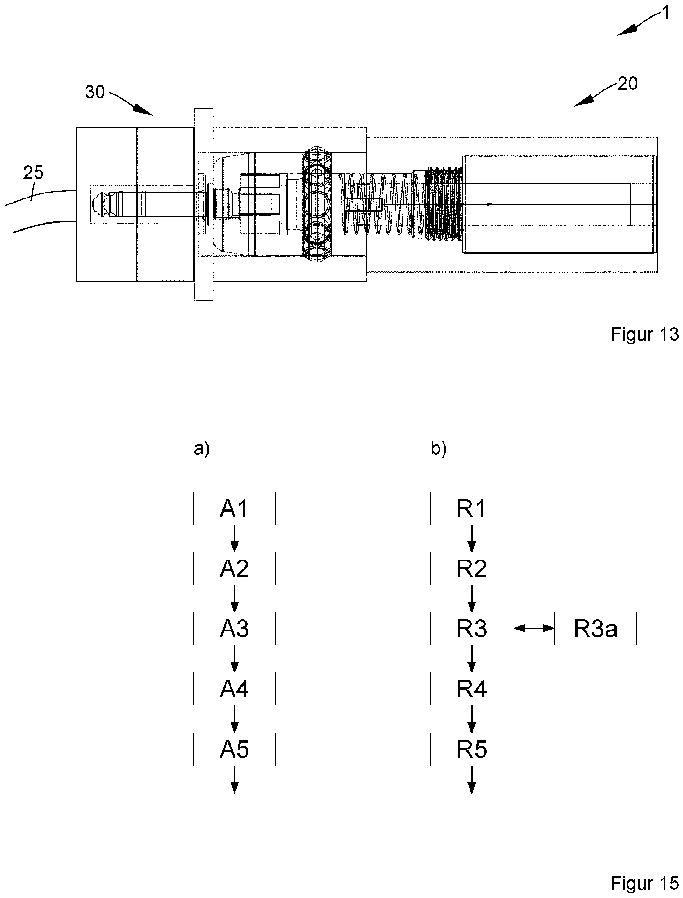

Figur 13 zeigt eine Weiterbildung der Verbindungsvorrichtung nach den Figuren 9 bis 12. Die zu den Figuren 9 bis 12 beschriebenen Details gelten auch für die Vorrichtung nach Figur 9, sofern nachfolgend nicht anders angegeben. Abweichend ist nun, dass das Sicherungskabel 25 am zweiten Schließteil 30 angebracht ist. Das zweite Schließteil 30 ist insbesondere das passive Schließteil und ist insbesondere mit der Basisstation 2 verbunden. Das erste Schließteil 20 mit der schaltbaren Schließeinheit 21, insbesondere umfassend den Freigabeaktuator 214, ist am Fahrzeug 3 angeordnet und wird insbesondere über Energie betrieben, die vom Akku des Fahrzeugs bereitgestellt wird.

Solche zweiten Schließteile ohne Kontakteinheit können kostengünstig bereitgestellt werden. Diese eignen sich insbesondere für Basisstationen an Stellen, an denen einem zeitweise mit einem erhöhten Rückgabeaufkommen zu rechnen ist.

Beispielsweise werden in Stadionnähe an einem Fussball-Ligaspieltag eine Vielzahl von Rückgabepositionen vor Beginn des Spiels benötigt. Nach dem Spiel werden die Fahrzeuge wieder verstärkt ausgeliehen, um die Fans nach Hause zu bringen. Für den Rest der Woche wird die hohe Kapazität nicht benötigt. Hier kann es nun sinnvoll sein, dass die Basisstation das "Nur-Verriegeln" für eine sehr hohen Anzahl von Fahrzeugen erlaubt, was kostengünstig realisierbar ist. Das Laden kann dann auf eine geringe Anzahl von Fahrzeugpositionen beschränkt sein. Eine solche Basisstation 1 (basierend auf der in Figur 1 gezeigten Basisstation) kann folglich zweite Schließteile 30 mit Kontakteinheiten 32 und dazu weitere zweite Schließteile 30 ohne Kontakteinheiten 32 aufweisen. Wichtig ist allerdings, dass die zweiten Schließteile 30 ohne Kontakteinheiten 32 dazu eingerichtet sind, erste Schließteile 20 mit ersten Kontakteinheiten 22 aufzunehmen. Der Platz zur Aufnahme der Kontakteinheiten des jeweils anderen Schließteils muss also vorgehalten sein.

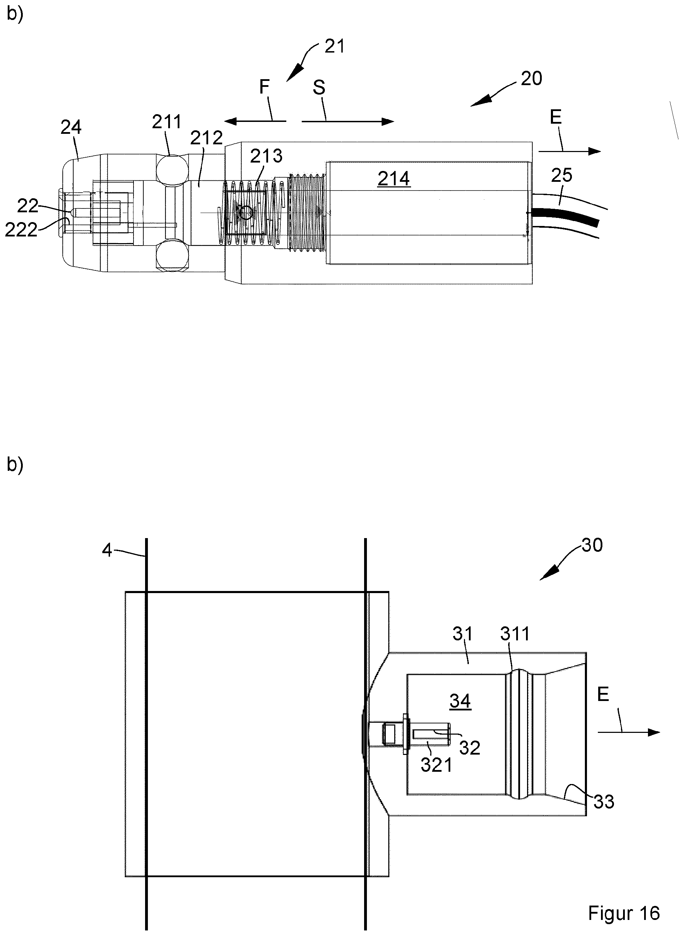

Figur 16 zeigt eine weitere Abwandlung der Verbindungsvorrichtung nach den Figuren 9 bis 12; im Folgenden wird nur auf die Abweichungen dazu eingegangen. Die erste Kontakteinheit 22 am ersten Schließteil 20 steht hierbei nicht klinkenartig hervor sondern ist innerhalb einer Kontaktbuchse 222 im Grundkörper 24 angeordnet. Die zweite Kontakteinheit 32 am zweiten Schließteil 20 hat einen Kontaktvorsprung 321, der während der Verbindens der beiden Schließteile in die Kontaktbuchse 222 hineingeführt wird. Das zweite Schließteil hat daher eine geringer axiale Länge; zudem ist die erste Kontakteinheit 22 vor äußeren Einflüssen geschützt.

Beispielhaft ist das zweite Schließteil 30 am Fahrzeug, insbesondere an dessen Lenkstange 4, angebracht.

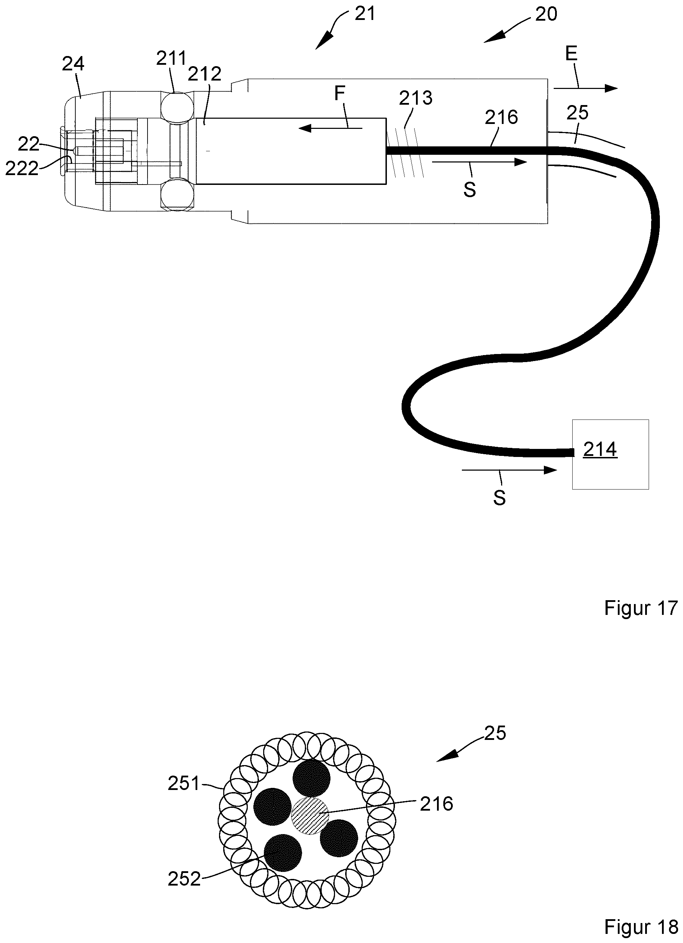

Figur 17 zeigt eine Abwandlung des ersten Schließteil 20 nach Figur 16; im Folgenden wird nur auf die Abwandlungen dazu eingegangen. Die Abwandlungen sind jeweils gleichermaßen auf die nicht beanspruchten Ausgestaltungen der Figuren 9, 11 und 13 anwendbar Der Freigabeaktuator 214 ist hierbei außerhalb des Schließteils 20 angeordnet. Die örtliche Anordnung des Freigabeaktuator 214 kann frei gewählt werden. Insbesondere kann der Freigabeaktuator 214 an einem feststehenden Teil der Basisstation 2 angeordnet sein. Ein Kraftübertragungsmittel 216 ist vorgesehen, welches die Stellkraft S von dem externen Freigabeaktuator 214 auf das Stellglied 212 im ersten Schließteil überträgt.

Das Kraftübertragungsmittel 216 ist insbesondere zumindest abschnittsweise in dem Sicherungskabel 25 geführt. Das Kraftübertragungsmittel ist in der Figur 17 als Seilzug dargestellt, der insbesondere als Bowdenzug ausgebildet sein kann. Eine Außenhülle des Seilzuges stützt sich an dem Grundkörper 24 ab, während ein innenliegendes Zugseil an dem Stellglied 212 befestigt ist. Bei Betätigung des Seilzuges wird so eine Lageveränderung des Stellglieds 212 gegenüber dem Grundkörper 24 bewirkt. Das zugrundeliegende Wirkprinzip der Kraftübertragung ist aus einer Fahrradbremse bekannt.

Alternativ kann das Kraftübertragungsmittel auch Teil einer Hydraulikanordnung sein, ähnlich der Kraftübertragung bei einer hydraulischen Fahrradbremse. Dann ist das Kraftübertragungsmittel im Sicherungskabel 25 in diesem Fall der Abschnitt einer Hydraulikleitung.

Durch die Anordnung des Freigabeaktuators 214 außerhalb des ersten Schließteils 20 und beabstandet zum ersten Schließteil 20 kann das erste Schließteil 20 klein und leichter ausgestaltet sein. Dennoch kann eine große und zuverlässig wirkende Stellkraft S bereitgestellt werden, da der Freigabeaktuator 214 an einem Ort angeordnet werden kann, in dem geringe Bauform und geringes Gewicht von geringerer Relevanz ist.

Figur 18 zeigt den Querschnitt des dazu passenden Sicherungskabels 25, das auf der nicht beanspruchten Ausgestaltung nach Figur 12 basiert. Zusätzlich umfasst das Sicherungskabel 25 zumindest einen Abschnitt des Kraftübertragungsmittels 216, welches insbesondere innerhalb der Armierung 251 angeordnet ist.

Figur 12 zeigt eine mögliche nicht beanspruchte Ausgestaltung des Sicherungskabels 25 im Querschnitt Das Sicherungskabel weist eine äußere Armierung 251 auf, die das Sicherungskabel 25 gegen Vandalismus schützen soll. Innerhalb der Armierung 251 sind unterschiedliche Leiter 252 vorhanden, die eine Übertragung von elektrischer Leistung und/oder Daten ermöglichen. Die äußere Armierung kann z.B. als Schwanenhals oder als Metallschutzschlauch (Metallschutzschlauch mit Kunststoffmantel) ausgestaltet sein. Auch wenn die Erfindung in den vorliegenden Ausführungsbeispielen konkret für Elektrokleinfahrzeuge beschrieben wurde, ist es auch denkbar, herkömmliche Kleinfahrzeuge wie Leihräder oder Leihroller (auch ohne Elektroantrieb) anhand einer Verbindungsvorrichtung der beschriebenen Art zu sichern. Die entsprechenden Kontakteinheiten zur Stromübertragung sind dann entbehrlich.

Der Freigabeaktuator 214 kann in beiden Varianten ein Hubmagnet sein, der selektiv eine Stellkraft S entgegen der Federkraft F der Stellfeder erzeugen kann, die insbesondere größer als die Federkraft ist. Für die Kraftaufbringung kann aber auch ein anderes Stellglied verwendet werden, wobei sich der Hubmagnet dadurch auszeichnet, dass er besonders günstig ist.

Die Fahrzeuge können bei einem Abstellen an der jeweiligen Basisstation wie folgt identifiziert werden.

Beim Abstellen des Fahrzeugs mit einem Ladevorgang identifiziert sich der Nutzer an der Basisstation und/oder an einem ersten Schließteil, indem beispielsweise der Nutzer einen QR-code an der Basisstation 2 bzw. dem Schließteil scannt. Wenn nun zusätzlich an diesem ersten Schließteil ein Ladevorgang beginnt, kann über die Identifikation des Nutzers die Zuordnung zwischen erstem Schließteil und Fahrzeug hergestellt werden.

Beim späteren Trennen des Fahrzeugs von der Basisstation kann sichergestellt werden, dass das korrekte erste Schließteil freigegeben wird.

Beim Abstellen des Fahrzeugs ohne Ladevorgang kann sich der Nutzer gleichermaßen an der Basisstation und/oder an einem ersten Schließteil identifizieren. Auch in diesem Fall erfolgt zumindest eine kurzfristige Kontaktierung über die Kontaktierungseinheiten, wodurch die Zuordnung zwischen erstem Schließteil und Fahrzeug hergestellt wird.

Bei einer Ausgestaltung, die insbesondere ohne Kontaktierungseinheit (z.B. für Leihräder ohne Elektroantrieb) auskommen kann, kann sich der Nutzer gleichermaßen an der Basisstation und/oder an einem ersten Schließteil identifizieren. Die zweite Kontaktierungseinheit 30 am Fahrzeug kann mit einem Endwiderstand versehen sein. Auch hier kann seitens der ersten Kontaktierungseinheit erkannt werden, sobald ein zumindest kurzzeitiger Stromfluss durch die Kontaktierungseinheiten erfolgt.

Alternativ zur Identifizierung über den Umweg mit einem Nutzer mit Hilfe des Lesens des QR-codes kann am Fahrzeug auch ein elektronisches Identifizierungsbauteil vorgesehen sein, z.B. ein EEPROM (electrically erasable programmable read-only memory), der auf Anforderung eine eindeutige Kennung (die Identifizierungsinformation) ausgibt. Beim Koppeln mit den Kontaktierungseinheiten kann so eine eindeutige Zuordnung des Fahrzeugs zum angeschlossenen ersten Schließteil direkt zwischen Fahrzeug und Basisstation 2 bzw. erstem Schließteil vorgenommen werden. Eine Leseeinheit kann an der Basisstation vorgesehen sein, die bei hergestelltem Kontakt den Inhalt und damit eine Identifizierungsinformation des Kleinfahrzeugs auslesen kann.

Es sind sehr kleine EEPROMs am Markt verfügbar, so dass diese einfach in das zweite Schließteil 30 am Fahrzeug integriert werden können.

Wenn ein Kleinfahrzeug an der Basisstation über die Verbindungsvorrichtung befestigt wird, wird dieser Vorgang in einer Datenbasis registriert. Hierzu wird eine Identifikationsinformation in der Datenbasis mit dem ersten Schließteil verknüpft. Sobald zu einem späteren Zeitpunkt die Freigabe dieses Fahrzeug veranlasst werden soll, so wird über diese Verknüpfung wiederum das erste Schließteil ermittelt, an welchem das Kleinfahrzeug angeschlossen ist. Der Freigabeaktuator dieses Schließteils kann dann gezielt aktiviert werden, wodurch das Fahrzeug freigegeben wird.

Anhand der beanspruchten Verbindungsvorrichtung sollen insbesondere batteriebetriebene Leihfahrzeuge an der Basisstation verriegelt werden. Allerdings ist es denkbar, dass nach und nach auch Fahrzeuge mit Wechselakkus in Betrieb genommen werden, was einen Ladevorgang obsolet macht. Insbesondere für einen Mischbetrieb ist es mit der vorliegenden Erfindung auch möglich, Fahrzeuge ohne Elektroantrieb anzuschließen.

Sollte die Verbindungsvorrichtung 1 nach einer der vorgenannten Figuren keine Ladefunktion unterstützen, so kann in den jeweiligen Ausgestaltungen auf die Kontakteinheiten 22, 22 zumindest in einem der Schließteile verzichtet werden. Es kann allerdings vorteilhaft sein, dass das Schließteil, welches an der Basisstation angebracht ist, eine Kontakteinheit besitzt, so dass dort Fahrzeuge mit Ladefunktion und Fahrzeuge ohne Ladefunktion gleichermaßen abgestellt werden können.

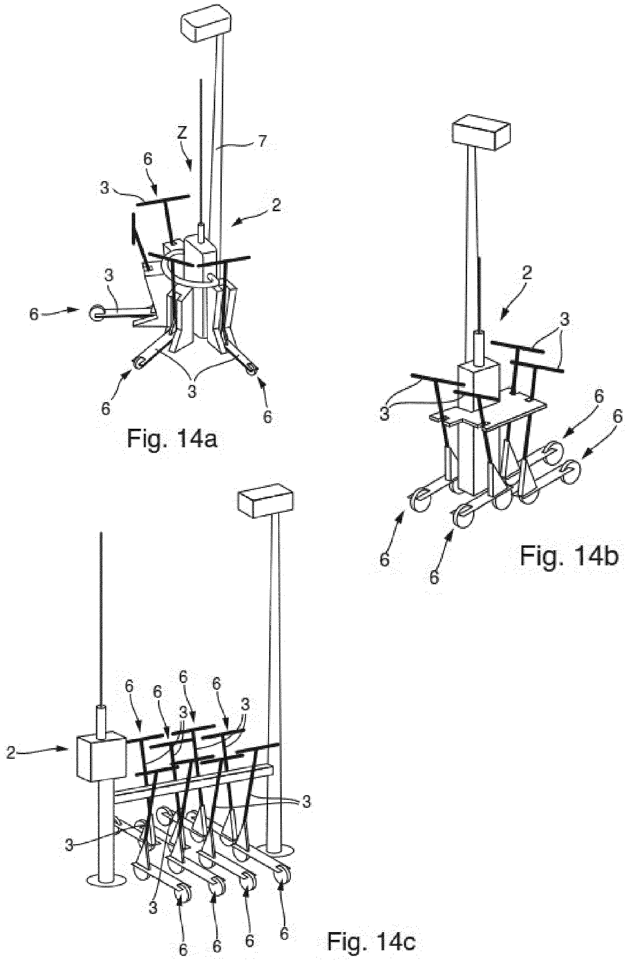

Die Figuren 14a, 14b und 14c zeigen weitere Ausgestaltungen, die mit den zuvor beschriebenen Ausgestaltungen kombinierbar sind. Hierbei weist die Basisstation 2 mehrere Fahrzeugpositionen 6 auf, die z.B. zumindest bogenförmig, insbesondere kreisbogenförmig (Figur 14a) oder auch entlang eines eckigen Bogens (Figur 14b), um ein Zentrum Z herum angeordnet sind. Entsprechend sind auch die verbundenen Elektrokleinfahrzeuge 3 bogenförmig um das Zentrum Z herum angeordnet, In dem Zentrum Z kann sich die Kommunikations- und Leistungselektronik der Basisstation 2 befinden.

Alternativ oder in Kombination dazu kann im Zentrum eine Straßenlaterne 7 angeordnet sein. In der Variante nach Figur 14c sind die Elektrokleinfahrzeuge 3 an einer Seite der Straßenlaterne 7 angeordnet.

Anhand einer Straßenlaterne 7 wird auf technisch einfache Weise der Zugang zu elektrischer Leistung ermöglicht, ohne dass Leitungen neu zu legen sind. Auch sonstige Erdarbeiten können entfallen um bereits verlegte Stromleitung anzuzapfen. Auch rein mechanisch kann die Straßenlaterne dazu benutzt werden, als Grundgestell für die einzelnen Park- bzw. Ladebuchten zu fungieren.

Insbesondere befinden sich die Fahrzeugpositionen zumindest teilweise in einem Abstand von weniger als 2m von der Straßenlaterne 7.

Anhand der Figur 15a wird ein möglicher Verfahrensablauf während eines Ausleihvorgangs beschrieben.

Im Schritt A1 öffnet der Nutzer eine App, z.B. auf dem Mobiltelefon.

Im Schritt A2 erfolgt eine Fahrzeugidentifizierung. Dies kann derart erfolgen, dass der Nutzer einen Code, insbesondere einen QR-Code oder RFID, einen NFC Code am Fahrzeug scannt. Alternativ kann dies auch über übereinstimmende Positionsdaten erfolgen, sofern dadurch eine eindeutige Zuordnung eines Fahrzeugs ermöglicht ist.

Im Schritt A3 wird vom Nutzer bestätigt, dass das im Schritt A2 identifizierte Fahrzeug ausgeliehen werden soll.

Im Schritt A4 wird der Freigabeaktuator betätigt, so dass ein Trennen der beiden Schließteile voneinander möglich ist und es erfolgt die Trennung der beiden Schließteile voneinander. Hierbei kann es erforderlich sein, dass der Nutzer den Trennvorgang aktiv unterstützt.

Im Schritt A5 wird das Trennen informationstechnisch erfasst. Hierbei kann ein Signal eines Sensors an einem der Schließteile ein entsprechendes Signal ausgegeben, welches darauf hinweist, dass die Schließteile nicht mehr miteinander verbunden sind.

Parallel zu einem der Schritte 4 oder 5 wird das Fahrzeug für die Nutzung freigeschaltet. Insbesondere wird dabei eine Wegfahrsperre deaktiviert. Hierzu kann eine Nachricht an das Fahrzeug übermittelt werden, welche eine Freigabeaufforderung beinhaltet.

Im Schritt A6 beginnt die Nutzung des Fahrzeug. Insbesondere fährt der Nutzer mit dem Fahrzeug los.

Anhand der Figur 15b wird ein möglicher Verfahrensablauf während eines Rückgabevorgangs beschrieben.

Im Schritt R1 beendet der Nutzer die Nutzung des Fahrzeugs; er stellt das Fahrzeug an der Basisstation ab. Bereits hier können die beiden Schließteile miteinander verbunden werden.

Im Schritt R2 wird die App geöffnet.

Im Schritt R3 wird eine Eingabe "Beenden" an der App getätigt. Dabei kann eine Identifizierung der Basisstation und/oder eines individuellen Schließteils, welches an der Basisstation angeschlossen ist und mit dem das Schließteil des Fahrzeugs verbunden werden soll, durchgeführt werden. Dies kann durch Scannen eines Codes an der Basisstation und/oder an dem Schließteils dem Basisstation anhand der App erfolgen.

Der Schritt R3 kann einen Teilschritt R3a umfassen. In diesem Schritt wird kommuniziert (insbesondere dem Nutzer mitgeteilt), mit welchem von mehreren Schließteilen an der Basisstation das Schließteil am Fahrzeug verbunden werden soll. Insbesondere ist es hierdurch möglich, dem Verbindungsvorgang oder dem Fahrzeug gezielt entweder ein Schließteil mit Ladefunktionsunterstützung und/oder mit Kontaktierungseinheit oder ein Schließteil ohne Ladefunktionsunterstützung und/oder ohne Kontaktierungseinheit zuzuweisen.

Spätestens im Schritt R4 wird der Freigabeaktuator in einem Zustand gehalten, in dem ein Verbinden der beiden Schließteile ermöglicht ist. Spätestens jetzt verbindet der Nutzer die beiden Schließteile miteinander. Das Verbinden kann aber auch schon vorher geschehen sein.

Im Schritt R5 befindet sich der Freigabeaktuator in einem Zustand, in dem eine Entnahme nicht (mehr) möglich ist. In diesem Zustand kann der Freigabeaktuator bereits deaktiviert sein. Das Verriegeln der beiden Schließteile kann dabei durch ein passives Einrasten erfolgen, ohne dass dazu der Freigabeaktuator in unterschiedliche Zustände zu bringen ist. Zudem wird die Verbindung insbesondere durch einen Sensor informationstechnisch erfasst.

Auf ein explizites Identifizieren des Fahrzeugs kann beim Rückgabevorgang verzichtet werden, insbesondere wenn mit dem Nutzer und/oder der geöffneten App zum Zeitpunkt der Rückgabe nur ein ausgeliehenes Fahrzeug verknüpft ist.

Alternativ kann beim Rückgabevorgang eine eindeutige Identifikation eines jeweiligen zurückgegebenen Fahrzeugs vorgenommen werden. Dies kann wie folgt durchgeführt werden.

Sowohl die Basisstation als auch das Fahrzeug sind mit einem Bluetooth-Modul ausgestattet. Kommt ein Fahrzeug in die Nähe der Basisstation wird eine Kommunikation zwischen der Basisstation und dem Fahrzeug via Bluetooth aufgebaut. Die Basisstation erkennt so, welche Fahrzeuge sich in der Nähe der Basisstation befinden, da jeweils eine eindeutige Identifikationsangabe über Bluetooth von dem Fahrzeug bereitgestellt wird. Steigt in der Folge der Ladezustand eines Fahrzeugs an, so kann darauf geschlossen werden, dass sich das identifizierte Fahrzeug in der Ladestation befindet. Durch gezieltes Aus- und wieder Einschalten des Ladestroms an einem individuellen Schließteil der Basisstation (Testbestromung) kann ein identifiziertes Fahrzeug dem jeweiligen Schließteil zugeordnet werden. Es lässt sich folglich feststellen, welches Fahrzeug an welchem Schließteil befestigt ist (dies ist vorteilhaft, wenn mehrere Fahrzeuge nahezu gleichzeitig in der Ladestation angekoppelt werden). Diese Identifizierung kann dann auch für die Abrechnung gegenüber dem Kunden genutzt werden. Aufgrund des optionalen Auslesens des Ladezustandes und drahtloser Übermittlung insbesondere über Bluetooth und der Strommessung an dem jeweiligen Schließteil kann eindeutig die bereitgestellte Strommenge für das jeweilige Fahrzeug ermittelt werden.

Für sämtliche Ausgestaltungen gilt, dass die Stromversorgung für den Freigabeaktuator durch die Ladeeinrichtung an der Basisstation bereitgestellt werden kann. Alternativ kann die Stromversorgung für den Freigabeaktuator von dem Akkumulator des Fahrzeugs bereitgestellt werden. Bei Bedarf können weitere elektrische Kontakte an den Schließteilen vorgesehen sein, um die Stromversorgung für den Freigabeaktuator vom ersten Schließteil auf das zweite Schließteil oder umgekehrt zu übertragen.

### Bezugszeichenliste

- 1: Verbindungsvorrichtung
- 2: Basisstation, insbesondere Ladestation
- 3: Elektrokleinfahrzeug
- 4: Lenkstange des Elektrokleinfahrzeugs
- 5: Akkumulator
- 6: Fahrzeugpositionen
- 7: Straßenlaterne
- 8: Mobiltelefon
- 20: erstes Schließteil
- 21: erste Sicherungseinheit
- 211: Sicherungskörper
- 211a: Riegelausnehmung
- 212: Stellglied
- 213: Stellfeder
- 214: Freigabeaktuator
- 215: Sicherungsaufnahme
- 216: Seilzug
- 22: erste Kontakteinheit
- 221: Federkontakt
- 222: Kontaktbuchse
- 23: Führungsanordnung
- 231: Führungsschiene
- 231v: Vertikalführungsfläche
- 231h: Horizontalführungsfläche
- 231a,b: Abschnitte der Führungsschiene
- 232: Lenkstangenaufnahmeraum
- 233: Radwinkelführung
- 24: Grundkörper
- 25: Sicherungskabel
- 251: Armierung
- 252: Leiter
- 26: Rückstellfeder
- 27: Führungsanordnung
- 30: zweites Schließteil
- 31: zweite Sicherungseinheit
- 311: Ringnut
- 312: Schließriegel
- 32: zweite Kontakteinheit
- 321: Kontaktvorsprung
- 33: Führungsglied
- 34: Aufnahmeraum

- S: Stellkraft des Aktuators
- F: Federkraft der Stellfeder
- E: Entnahmerichtung
- V: Verbindungsrichtung
- Va: erster Abschnitt
- Vb: zweiter Abschnitt
- L: Länge des ersten Abschnitts
- Ha: vertikale Höhendifferenz des ersten Abschnitts
- Hb: vertikale Höhendifferenz des zweiten Abschnitts
- VR: Vorderrad
- a: Winkel des ersten Abschnitts zur Horizontalen
- Z: Zentrum
- A1-A5: Verfahrensschritte beim Ausleihvorgang
- R1-R5: Verfahrensschritte beim Rückgabevorgang

## Patentansprüche

1. Verbindungsvorrichtung (1) zum Verbinden eines Kleinfahrzeugs (3) mit einer Basisstation (2), umfassend
ein erstes Schließteil (20) angebracht an der Basisstation (2) mit einer ersten Sicherungseinheit (21),
ein zweites Schließteil (30) angebracht an dem Kleinfahrzeug (3) mit einer zweiten Sicherungseinheit (31);
wobei das erste Schließteil (20) und das zweite Schließteil (30) zur Verbindung miteinander ausgebildet sind,
wobei die erste Sicherungseinheit (21) selektiv zwischen einem Freigabezustand und einem Schließzustand überführbar ist,
wobei die erste Sicherungseinheit (21) und die zweite Sicherungseinheit (31) derart, insbesondere komplementär, zueinander, ausgebildet sind, dass in dem Schließzustand ein Trennen der miteinander verbundenen ersten und zweiten Schließteile (20, 30) unterbunden ist;
wobei die Verbindungvorrichtung ein Sicherungskabel (25) zum mechanischen Sichern des Kleinfahrzeugs (3) an der Basisstation (2) umfasst,
dass das Sicherungskabel (25) fest an dem ersten Sicherungsteil (20) angeschlossen ist, wobei ein Sicherungskörper (211) und/oder ein Stellglied (212) am ersten Schließteil (20) angebracht ist, wobei das erste Schließteil (20) über das Sicherungskabel (25) fest mit der Basisstation (2) verbunden ist,
dass ein Freigabeaktuator (214) zum Überführen des Sicherungskörpers (211) und/oder des Stellglieds (212) aus dem Schließzustand außerhalb des ersten Schließteils (20) angeordnet ist, insbesondere entfernt zum ersten Schließteil angeordnet ist,
**dadurch gekennzeichnet, dass**
ein Kraftübertragungsmittel (216) vorgesehen ist, eingerichtet zur Übertragung einer Stellkraft (S) vom außerhalb des ersten Schließteils angeordneten Freigabeaktuator (214) zum innerhalb des ersten Schließteils (20) angeordneten Sicherungskörper (211) und/oder Stellglied (212),
wobei das Kraftübertragungsmittel (216) zumindest abschnittsweise in dem Sicherungskabel (25) geführt ist.

2. Verbindungsvorrichtung (1) nach Anspruch 1,
**dadurch gekennzeichnet,**
**dass** das Sicherungskabel (25) eine äußere Armierung (251) aufweist insbesondere zum Schutz des Sicherungskabels (25) gegen Vandalismus; und dass innerhalb der Armierung (251) Leiter (252) zur Übertragung von elektrischer Leistung und/oder Daten angeordnet sind.

3. Verbindungsvorrichtung (1) nach einem der vorherigen Ansprüche,
**dadurch gekennzeichnet,**
**dass** das erste Schließteil (20) eine erste Kontakteinheit (22) aufweist, dass das zweite Schließteil (30) eine zweite Kontakteinheit (32) aufweist, dass die erste und die zweite Kontakteinheit (22, 32) derart, insbesondere komplementär, zueinander ausgebildet sind, dass eine elektrische Verbindung zum Übertragen eines Ladestroms und/oder von Daten zwischen der Basisstation (2) und dem Kleinfahrzeug (3) hergestellt ist.

4. Verbindungsvorrichtung (1) nach einem der vorherigen Ansprüche,
**gekennzeichnet durch**
eine Aktuatoranordnung (213, 214) eingerichtet zum selektiven Überführen der ersten Sicherungseinheit (21) in und aus dem Schließzustand.

5. Verbindungsvorrichtung (1) nach einem der vorherigen Ansprüche,
**gekennzeichnet durch**
zumindest einen Sicherungskörper (211), der insbesondere an dem ersten der Schließteile (20) angebracht ist und/oder Bestandteil der ersten Sicherungseinheit (21) ist,
wobei der Sicherungskörper (211) selektiv in einem Schließzustand festlegbar ist, insbesondere anhand der Aktuatoranordnung (213, 214),
wobei der Sicherungskörper (211) eingerichtet ist, in dem Schließzustand das zweite Schießteil (30) in gekoppelter Stellung mit dem ersten Schließteil (20) zu halten.

6. Verbindungsvorrichtung (1) nach einem der vorherigen Ansprüche,
**dadurch gekennzeichnet,**
**dass** die Verbindungsvorrichtung (1) selbsthemmend ausgebildet ist, insbesondere dass die Verbindungsvorrichtung (1) derart ausgebildet ist, dass bei einer Beaufschlagung des, insbesondere verriegelten, Sicherungskörpers (211), insbesondere anhand einer Beaufschlagung anhand des zweiten Schließteils (30), aus dem Schließzustand heraus eine Hemmkraft (H) erzeugt wird, die den Sicherungskörper (211) in dessen Schließzustand beaufschlagt.

7. Verbindungsvorrichtung (1) nach einem der vorherigen Ansprüche,
**dadurch gekennzeichnet,**
**dass** die Aktuatoranordnung (213, 214)
- eine Stellfeder (213) umfasst, eingerichtet zur Bereitstellung einer Federkraft (F), wobei anhand der Federkraft (F) der Sicherungskörper (211) zumindest mittelbar in den Schließzustand beaufschlagt wird,
- einen Freigabeaktuator (214) umfasst, eingerichtet zur selektiven Erzeugung einer der Federkraft (F) entgegenwirkenden Stellkraft (S).

8. Verbindungsvorrichtung (1) nach einen der vorherigen Ansprüche,
**dadurch gekennzeichnet,**
**dass** das Kraftübertragungsmittel (216) ein Seilzug insbesondere Bowdenzug, oder eine Hydraulikleitung einer Hydraulikanordnung, ist.

9. Verbindungsvorrichtung (1) nach einem der vorherigen Ansprüche,
**gekennzeichnet durch,**
eine Führungsanordnung (23) an einem der Schließteile, insbesondere am ersten Schließteil (30),
und ein Führungsglied (33) am anderen der Schließteile, insbesondere am zweiten Schließteil (30),
wobei die Führungsanordnung (23) und das Führungsglied (33) derart zueinander ausgebildet sind, dass bei einer Schließbewegung der Schließteile, insbesondere entlang einer Verbindungsrichtung (V) der Schließteile (20, 30) aufeinander zu, die zweite Sicherungseinheit (31) in Eingriff mit der ersten Sicherungseinheit (21) gerät,
und insbesondere und/oder soweit vorhanden die zweite Kontakteinheit (32) in elektrisch leitenden Kontakt zur ersten Kontakteinheit (22) gerät.

10. Anordnung umfassend ein Elektrokleinfahrzeug (3) und eine Basisstation (2), mit einer Verbindungsvorrichtung (1) nach einem der vorherigen Ansprüche.

11. Anordnung nach dem vorherigen Anspruch,
**dadurch gekennzeichnet,**
**dass** das erste Schließteil (20) an der Basisstation (2) fest angebracht ist und
das zweite Schließteil (30) an dem Elektrokleinfahrzeug (3) fest angebracht ist.

12. Anordnung nach einem der vorherigen Ansprüche,
**dadurch gekennzeichnet,**
**dass** eines der Schließteile über das Sicherungskabel (25) beweglich aber gesichert mit der Basisstation (2) verbunden ist.

13. Anordnung nach einem der vorherigen Ansprüche,
wobei die Basisstation (3) eine Mehrzahl, insbesondere zumindest drei, Fahrzeugpositionen (6) definiert, an welchen jeweils ein Kleinfahrzeug (3) abgestellt werden und über die Verbindungsvorrichtung mit der Basisstation verbunden werden kann,
wobei die Fahrzeugpositionen
- zumindest teilweise innerhalb eines Abstandes von weniger als 2m zu einer Straßenlaterne (7) angeordnet sind, und/oder
- bogenförmig, insbesondere kreisbogenförmig oder eckig, um ein Zentrum (Z) herum angeordnet sind.

14. Verwendung einer Verbindungsvorrichtung oder Anordnung nach einem der vorherigen Ansprüche zum Verbinden eines Kleinfahrzeugs (3) mit einer Basisstation (2).

15. Verwendung nach dem vorherigen Anspruch,
umfassend die folgenden Verfahrensschritte während eines Ausleihvorgangs:
- (A1) Initiieren eines Ausleihvorgangs, insbesondere durch Aufrufen einer App auf einem mobilen Endgerät, insbesondere einem Mobiltelefon,
- (A2) Identifizieren eines Fahrzeugs, welches auszuleihen ist, und welches mit einem Schließteil an einem anderen Schließteil der Basisstation verbunden ist,
- (A3) Bestätigen durch den Nutzer, insbesondere anhand der App, dass das identifizierte Fahrzeug ausgeliehen werden soll,
- (A4) Betätigen eines Freigabeaktuators an einem der Schließteile, so dass das Schließteil am identifizierten Fahrzeug von einem Schließteil an der Basisstation getrennt werden kann,
- (A5) informationstechnisches Erfassen der Trennung der beiden Schließteile, insbesondere anhand eines Sensors an einem der beiden Schließteile, und/oder Freischalten der Nutzung des identifizierten Fahrzeugs.

## Claims

1. A connecting device (1) for connecting a small vehicle (3) to a base station (2), comprising
a first locking part (20) attached to the base station (2), having a first securing unit (21),
a second locking part (30) attached to the small vehicle (3), having a second securing unit (31);
wherein the first locking part (20) and the second locking part (30) are designed to be connected to one another,
wherein the first securing unit (21) can be selectively transferred between a release state and a locking state,
wherein the first securing unit (21) and the second securing unit (31) are designed in such a way, in particular complementary to one another, that separation of the interconnected first and second locking parts (20, 30) is prevented in the locking state;
wherein the connecting device comprises a securing cable (25) for mechanically securing the small vehicle (3) to the base station (2),
that the securing cable (25) is fixedly connected to the first locking part (20),
wherein a securing body (211) and/or a control member (212) is attached to the first locking part (20), wherein the first locking part (20) being firmly connected to the base station (2) via the securing cable (25);.
that a release actuator (214) for transferring the securing body (211) and/or the control member (212) out of the locking state is arranged outside of the first locking part (20), in particular is arranged remote from the first locking part,
**characterized in**
**that** a force transmission means (216) is provided, adapted for transmitting an actuating force (S) from the release actuator (214), arranged outside the locking part (20), to the securing body (211) and/or control member (212), arranged inside the locking part (20),
wherein the force transmission means (216) being guided at least in sections in the securing cable (25).

2. Connecting device (1) according to claim 1,
**characterized in**
**that** the securing cable (25) has an outer armoring (251), in particular for protecting the securing cable (25) against vandalism;
and **that** conductors (252) for transmitting electrical power and/or data are arranged inside the armoring (251).

3. Connecting device (1) according to one of the previous claims,
**characterized in**
**that** the first locking part (20) has a first contact unit (22),
**that** the second locking part (30) has a second contact unit (32),
**that** the first and second contact units (22, 32) are designed, in particular complementary, to one another, in such a way that an electrical connection for transmitting a charging current and/or data is established between the base station (2) and the small vehicle (3).

4. Connecting device (1) according to any one of the preceding claims,
**characterized by**
an actuator arrangement (213, 214) arranged for selectively transferring the first securing unit (21) to and out of the locking state.

5. Connecting device (1) according to any one of the preceding claims,
**characterized by**
at least one securing body (211), which is in particular attached to the first of the locking parts (20) and/or is a component of the first securing unit (21),
wherein the securing body (211) can be selectively fixed in a locking state, in particular by means of the actuator arrangement (213, 214),
wherein the securing body (211) is adapted to hold the second shooting part (30) in coupled position with the first locking part (20) in the locking state.

6. Connecting device (1) according to any one of the preceding claims,
**characterized in**
**in that** the connecting device (1) is designed to be self-locking,
in particular **in that** the connecting device (1) is designed in such a way that,
when the securing body (211), in particular locked, is acted upon, in particular by means of an action by means of the second locking part (30), an inhibiting force (H) is generated out of the locking state, which inhibiting force urges the securing body (211) in its locking state.

7. Connecting device (1) according to any one of the preceding claims,
**characterized in**
**in that** the actuator arrangement (213, 214)
- comprises an actuating spring (213), set up to provide a spring force (F), the securing body (211) being acted upon at least indirectly in the locking state by means of the spring force (F),
- comprises a release actuator (214), set up to selectively generate an actuating force (S) counteracting the spring force (F).

8. Connecting device (1) according to any of the previous claims,
**characterized in**
**in that** the force transmission means (216) is a cable pull, in particular a Bowden cable, or a hydraulic line of a hydraulic arrangement.

9. Connecting device (1) according to any one of the preceding claims,
**characterized by,**
a guide arrangement (23) on one of the locking parts, in particular on the first locking part (30),
and a guide member (33) on the other of the locking parts, in particular on the second locking part (30),
wherein the guide arrangement (23) and the guide member (33) are formed relative to one another in such a way that, during a locking movement of the locking parts in particular along a connecting direction (V) of the locking parts (20, 30) towards one another, the second securing unit (31) comes into engagement with the first securing unit (21),
and in particular and/or where present the second contact unit (32) comes into electrically conductive contact with the first contact unit (22).

10. Arrangement comprising a small electric vehicle (3) and a base station (2), with a connecting device (1) according to any of the previous claims.

11. Arrangement according to the previous claim,
**characterized in**
**that** the first locking part (20) is fixedly attached to the base station (2) and the second locking part (30) is fixedly attached to the small electric vehicle (3).

12. Arrangement according to any one of the preceding claims,
**characterized in**
**that** one of the locking parts is movably but securely connected to the base station (2) via the securing cable (25).

13. Arrangement according to any of the previous claims,
wherein the base station (2) defines a plurality, in particular at least three, vehicle positions (6) at which a small vehicle (3) can be parked in
each case and can be connected to the base station via the connecting device,
wherein the vehicle positions
- are arranged at least partially within a distance of less than 2m from a street lantern (7), and/or
- are arranged in an arc, in particular in the shape of a circular arc or in an angular shape, around a center (Z).

14. Use of a connecting device or arrangement according to any one of the preceding claims for connecting a small vehicle (3) to a base station (2).

15. Use according to the previous claim,
comprising the following method steps during a rental process:
- (A1) initiating a rental process, in particular by calling up an app on a mobile terminal, in particular a mobile phone,
- (A2) identifying a vehicle which is to be rented and which is connected with a locking part to on another locking part of the base station,
- (A3) confirmation by the user, in particular by means of the app, that the identified vehicle is to be rented,
- (A4) actuation of a release actuator on one of the locking parts, so that the locking part on the identified vehicle can be separated from a locking part on the base station,
- (A5) information technological detection of the separation of the two locking parts, in particular by means of a sensor on one of the two locking parts, and/or release of the use of the identified vehicle.

## Revendications

1. Dispositif de connexion (1), destiné à connecter un véhicule (3) de petite taille sur un poste de base (2), comprenant
une première pièce de fermeture (20), montée sur le poste de base (2), pourvue d'une première unité de sécurisation (21),
une deuxième pièce de fermeture (30), montée sur le véhicule (3) de petite taille, pourvue d'une deuxième unité de sécurisation (31);
la première pièce de fermeture (20) et la deuxième pièce de fermeture (30) étant prévues pour être connectées l'une avec l'autre,
la première unité de sécurisation (21) étant susceptible d'être passée sélectivement entre une position de libération et une position de fermeture,
la première unité de sécurisation (21) et la deuxième unité de sécurisation (31) étant conçues de telle sorte, notamment de manière complémentaire, que dans la position de fermeture, une désolidarisation de la première et deuxième pièces de fermeture (20, 30) soit empêchée ;
le dispositif de connexion comprenant un câble de sécurisation (25), destiné à sécuriser mécaniquement le véhicule (3) de petite taille sur le poste de base (2),
le câble de sécurisation (25) étant raccordé sur la première pièce de fermeture (20), un corps de sécurisation (211) et / ou un organe de réglage (212) étant monté sur la première pièce de fermeture (20), la première pièce de fermeture (20) étant solidement connectée par l'intermédiaire du câble de sécurisation (25) avec le poste de base (2),
un actionneur (214) de libération, destiné à faire passer le corps de sécurisation (211) et / ou l'organe de réglage (212) de la position de fermeture, étant placé à l'extérieur de la première pièce de fermeture (20), étant placé notamment en éloignement de la première pièce de fermeture,
**caractérisé**
**en ce qu'**il est prévu un moyen de transmission (216) de la force, configuré pour transmettre une force de réglage (S) à partir de l'actionneur (214) de libération placé à l'extérieur de la première pièce de fermeture vers le corps de sécurisation (211) et / ou l'organe de réglage (212) placé à l'intérieur de la première pièce de fermeture (20),
le moyen de transmission (216) de la force étant guidé au moins par endroits dans le câble de sécurisation (25).

2. Dispositif de connexion (1) selon la revendication 1,
**caractérisé**
**en ce que** la câble de sécurisation (25) comporte une armature (251) extérieure, destinée notamment à protéger le câble de sécurisation (25) contre le vandalisme ;
et **en ce qu'**à l'intérieur de l'armature (251) sont placés des conducteurs (252), destinés à transmettre une puissance électrique et / ou des données.

3. Dispositif de connexion (1) selon l'une quelconque des revendications
précédentes,
**caractérisé**
**en ce que** la première pièce de fermeture (20) comporte une première pièce de contact (22),
**en ce que** la deuxième pièce de fermeture (30) comporte une deuxième pièce de contact (32),
**en ce que** la première et la deuxième pièces de contact (22, 32) sont conçues, notamment de manière mutuellement complémentaire, de sorte à établir une connexion électrique, destinée à transmettre un courant de charge et / ou des données entre le poste de base (2) et le véhicule (3) de petite taille.

4. Dispositif de connexion (1) selon l'une quelconque des revendications
précédentes,
**caractérisé par**
un ensemble d'actionneurs (213, 214), configuré pour faire passer sélectivement la première unité de sécurisation (21) dans et hors de la position de fermeture.

5. Dispositif de connexion (1) selon l'une quelconque des revendications
précédentes,
**caractérisé par**
au moins un corps de sécurisation (211), qui est monté notamment sur la première des pièces de fermeture (20) et / ou qui est un élément de la première unité de sécurisation (21),
le corps de sécurisation (211) étant susceptible d'être immobilisé sélectivement dans une position de fermeture, notamment à l'aide de l'ensemble d'actionneurs (213, 214),
le corps de sécurisation (211) étant configuré pour maintenir dans la position de fermeture la deuxième pièce de fermeture (30) en position accouplée avec la première pièce de fermeture (20).

6. Dispositif de connexion (1) selon l'une quelconque des revendications
précédentes,
**caractérisé**
**en ce que** le dispositif de connexion (1) est conçu pour être autobloquant, notamment en ce que le dispositif de connexion (1) est conçu de telle sorte, que lorsque le corps de sécurisation (211), notamment verrouillé est sollicité, notamment à l'aide d'une sollicitation par la deuxième pièce de fermeture (30), hors de la position de fermeture, une force de retenue (H) soit générée, qui sollicite le corps de sécurisation (211) dans sa position de fermeture.

7. Dispositif de connexion (1) selon l'une quelconque des revendications
précédentes,
**caractérisé**
**en ce que** l'ensemble d'actionneurs (213, 214)
- comprend un ressort de réglage (213), configuré pour mettre à disposition une force de ressort (F), à l'aide de la force de ressort (F), le corps de sécurisation (211) étant sollicité au moins indirectement dans la position de fermeture,
- comprend un actionneur (214) de libération, configuré pour la génération sélective d'une force de réglage (S) agissant à l'encontre de la force de ressort (F).

8. Dispositif de connexion (1) selon l'une quelconque des revendications
précédentes,
**caractérisé**
**en ce que** le moyen de transmission (216) de la force est un câble de traction, notamment un câble de Bowden ou une conduite hydraulique d'un ensemble hydraulique.

9. Dispositif de connexion (1) selon l'une quelconque des revendications
précédentes,
**caractérisé par,**
un ensemble de guidage (23) sur l'une des pièces de fermeture, notamment sur la première pièce de fermeture (30),
et un organe de guidage (33) sur l'autre des pièces de fermeture, notamment sur la deuxième pièce de fermeture (30),
l'ensemble de guidage (23) et l'organe de guidage (33) étant conçus mutuellement de telle sorte que lors d'un déplacement en fermeture des pièces de fermeture, notamment le long d'une direction de connexion (V) des pièces de fermeture (20, 30) l'une vers l'autre, la deuxième unité de sécurisation (31) entre en engagement avec la première unité de sécurisation (21),
et notamment et / ou si elle est présente, que la deuxième pièce de contact (32) entre en contact conducteur électrique avec la première pièce de contact (22).

10. Ensemble comprenant un véhicule électrique (3) de petite taille et un poste de base (2), pourvu d'un dispositif de connexion (1) selon l'une quelconque des revendications précédentes.

11. Ensemble selon la revendication précédente,
**caractérisé**
**en ce que** la première pièce de fermeture (20) est solidement montée sur le poste de base (2) et en ce que la deuxième pièce de fermeture (30) est montée sur le véhicule électrique (3) de petite taille.

12. Ensemble selon l'une quelconque des revendications précédentes,
**caractérisé**
**en ce que** l'une des pièces de fermeture est connectée par l'intermédiaire du câble de sécurisation (25), de manière mobile, mais sécurisée avec le poste de base (2).

13. Ensemble selon l'une quelconque des revendications précédentes,
le poste de base (3) définissant une pluralité, notamment trois positions (6) du véhicule, dans lesquelles notamment un véhicule (3) de petite taille est déposé et par l'intermédiaire desquelles le dispositif de connexion peut être connecté avec le poste de base,
les positions du véhicule
- étant placées au moins partiellement à l'intérieur d'un écart de moins de 2 m par rapport à un réverbère (7) et / ou
- étant placées en forme d'arc, notamment en forme d'arc de cercle ou de manière angulaire autour d'un centre (Z).

14. Utilisation d'un dispositif de connexion ou d'un ensemble selon l'une quelconque des revendications précédentes pour connecter un véhicule (3) de petite taille avec un poste de base (2).

15. Utilisation selon la revendication précédente,
comprenant pendant un processus de location les étapes de procédé suivantes, consistant à :
- (A1) initier un processus de location, notamment en interrogeant une application sur un terminal mobile, notamment un téléphone mobile,
- (A2) identifier un véhicule, qui est disponible à la location et qui est connecté avec une pièce de fermeture sur une autre pièce de fermeture du poste de base,
- (A3) confirmer par l'utilisateur, notamment à l'aide de l'application que le véhicule identifié doit être loué,
- (A4) manoeuvrer un actionneur de libération sur l'une des pièces de fermeture, de telle sorte que la pièce de fermeture sur le véhicule identifié soit désolidarisée d'une pièce de fermeture sur le poste de base,
- (A5) détecter par informatique la désolidarisation des deux pièces de fermeture, notamment à l'aide d'un capteur sur l'une des deux pièces de fermeture, et / ou débloquer l'utilisation du véhicule utilisé.
